# EUROPEAN PATENT APPLICATION

(11) **EP 3 278 843 A1**
(43) Date of publication of application: **07.02.2018**
(21) Application number: 17184238.8
(22) Date of filing: 01.08.2017
(51) Int. Cl.: A63B 21/005, A63B 24/00

(54) **METHOD AND SYSTEM FOR ENERGY ABSORPTION**

(30) Priority: 03.08.2016 PL 41819716
(71) Applicant: Uni-Trol Sp. z o.o., 01-932 Warszawa (PL)
(72) Inventor: ROGUSKI, Wieslaw Albin, 01-932 Warszawa (PL); TWOREK, Jan, 01-932 Warszawa (PL)
(74) Representative: Wlasienko, Jozef

(57) **Abstract**

The subject matter of the invention relates to a method and system for energy absorption designed for use in particular in exercise apparatuses, and especially in the so-called fitness equipment.

The method for energy absorption consisting in that suitable current load values are selected in order to balance the kinetic energy expended by the person performing exercises with the energy absorbed by the system (100) for energy absorption, wherein the value of current load, which is selected by a computer (PC), is dependent on the psychomotor parameters of the person performing exercises.

The system (100) for energy absorption is provided with a variable current load circuit (150) connected to an element (S) producing direct current (DC) or alternating current (AC) electric energy, which is controlled by the computer (PC). The system (100) is also provided with a real-time counting/positioning circuit (120) incorporated between the element (S) producing direct current (DC) or alternating current (AC) electric energy and/or a mechanical system (UM), and the computer (PC).

## Description

### Field of the Invention

The subject matter of the invention relates to a method and system for energy absorption designed for use in particular in exercise apparatuses, and especially in the so-called fitness equipment.

The present invention generally relates to the field of energy absorption, and basically to a method for the absorption of energy supplied by the person performing exercises on an exercise apparatus in order to stabilize the operation of such an apparatus.

### Background of the Invention

People are surrounded by a multitude of mechanical devices, which are more or less frequently used in everyday life. These devices include fitness equipment designed, among others, to improve the physical condition of persons performing exercises thereon.

Basically, fitness equipment can be divided into two main groups: forced motion and passive motion equipment.

In the case of forced motion fitness equipment, the movement of the person performing exercises is enforced by a moving element which is being displaced by a mechanical system usually driven by an electric motor. One example of fitness equipment of this type is a treadmill for running. On the other hand, in the case of passive motion fitness equipment, the person performing exercises drives a piece of such equipment using his/her muscles and thus it receives energy produced by the person performing exercises. One example of fitness equipment of this type is a stationary bicycle.

Absorbed energy produced by the person performing exercises on such fitness equipment is usually converted into heat or causes movement of a medium such as oil, water, air, etc. The possible use of this energy for other purposes, including in particular for stabilizing the operation of said exercise apparatus or for producing energy necessary to power the apparatus or other apparatuses, or the like is not taken into account therein.

Stabilizing the operation of an exercise apparatus helps to provide comfort to the person performing exercises thereon. This can be achieved when the system for receiving energy from the person performing exercises adapts to his/her psychomotor characteristics. These characteristics include: movement speed, reaction to a change in movement speed, body weight of the person performing exercises and load.

For the sake of better understanding of the above issue, an exemplary ride of a person on a bicycle will be analyzed. Such person's muscles behave differently when he/she is riding on a straight and even road at 10 km/h compared to e.g. 20 km/h. These differences are determined by whether the person is riding downhill or wants to ride uphill, not to mention various hill gradients, which may also affect the person's muscles. Muscle adaptation in such situations is controlled by impulses from the brain which are sent to the person's muscles which react and thus adapt to the person's intentions. A similar idea has been used in the solution according to the invention.

### Description of the Prior Art.

In view of the above-described problem, in order to lose the kinetic energy of the person performing exercises and ensure his/her self-comfort during exercises on said exercise apparatuses, the invention provides a method and system for energy absorption which is used in particular in exercise apparatuses, and especially in the so-called fitness equipment.

The prior art discloses patent application No. EP2495868A1 titled ***"Electric energy collecting mechanism for exercise apparatuses"*** which describes an electric energy collecting mechanism for exercise apparatuses, each having an electric generator for generating electric energy, and each having an energy storing device for storing the electric energy generated by said electric generator, and each having an output terminal, a converting device which is coupled to the output terminals of the exercise apparatuses for receiving the electric energy from the energy storing devices and for converting the electric energy to an alternate current, and an electric reservoir is coupled to the converting device for receiving the alternate current from the converting device and for supplying the collected electric energy to energize the other electric facilities.

A similar solution is used in the commercially available **Sports Art** training equipment that uses a technology named **EKO**-**POWR®**, which technology, in simple terms, consists in that the kinetic energy produced by persons performing exercises on ECO-POWR® equipment in a fitness club is converted into electric energy. Then, this energy is directed into an internal electrical installation by means of special microinverters. This system does not require any set of batteries, since the electric energy is not stored but is directly used by the equipment that is working in the fitness club.

Furthermore, the prior art also discloses a solution concerning a self-powered exercise apparatus - patent application No. US20030166434A1 titled ***"Self-powered fitness equipment".*** In this case, the apparatus comprises a generator coupled to the first and second foot supports, which is actuated to produce power by the user's stepping motions. The device also includes a battery coupled to a generator to store at least part of the produced power. The apparatus also includes a lift system for automatically changing at least one of the elevation above the surface and the angular orientation of the guide relative to the frame. Since the lift system is powered by both the generator and the battery, actuation of the lift system will not alter the resistance to user pedalling the foot supports during exercising.

The above prior-art solutions, as compared to the claimed solution according to the present invention, use different technical means to fulfill the intended purposes of the present invention. In the above-presented prior art the torque is adjusted by adjusting and changing excitation current.

### Summary of the Invention

The subject matter of the present invention is therefore to provide a new solution in the form of a method and system for energy absorption for use in particular in exercise apparatuses, and especially in the so-called fitness equipment, which method and system are to enable the use and stabilization of the work of said exercise apparatus. In other words, they are to lead to the possibility of taking into account the amount and dynamics of the kinetic energy expended by the person performing exercises on such an exercise apparatus in real time.

To achieve the above objects, in accordance with one aspect of the present invention, the present invention provides a method for energy absorption for use in particular in exercise apparatuses, consisting in that the kinetic energy expended by the person performing exercises is converted, in a mechanical system, into rotational movement which drives a mechanical gear at the end of which there is connected an element producing direct current (DC) or alternating current (AC) electric energy, in which element rotational movement is converted into voltage, characterized in that the element producing direct current (DC) or alternating current (AC) electric energy and/or the mechanical system is in cooperation with a real-time counting/positioning circuit, wherein information is generated which information is subsequently sent to a computer wherein said information is analyzed, and subsequently a variable current load circuit connected to the element producing direct current (DC) or alternating current (AC) electric energy is controlled by means of the above-mentioned information processed by a computer in such a manner that suitable values of current load are selected in order to balance the kinetic energy expended by the person performing exercises with the energy absorbed by a system for energy absorption, wherein the value of current load that is selected by the computer is dependent on the psychomotor parameters of the person performing exercises.

Preferably, in the case where the counting/positioning circuit cooperates with the element producing direct current (DC) or alternating current (AC) electric energy, there is generated information regarding an instantaneous rotational speed and information regarding a change in the rotational speed of said element producing direct current (DC) or alternating current (AC) electric energy which information constitutes a rotation counter circuit, whereas in the case where the counting/positioning circuit cooperates with the mechanical system, there is generated information regarding the position of the person performing exercises on a piece of equipment based on at least one position sensor which constitutes a person positioning circuit.

Preferably, the body weight of the person performing exercises and movement dynamics of the person performing exercises on an exercise apparatus are used as psychomotor parameters thereof.

Preferably, the computer is powered from the element producing direct current (DC) or alternating current (AC) electric energy through a power supply.

Preferably, the power supply is used to store electric energy which is produced by the element producing direct current (DC) or alternating current (AC) electric energy.

According to another aspect of the present invention, the present invention provides a system for energy absorption for use in particular in exercise apparatuses, which has a mechanical system for converting the kinetic energy produced by the person performing exercises into rotational movement driving a mechanical gear to which there is connected an element producing direct current (DC) or alternating current (AC) electric energy, in which element rotational movement is converted into voltage, characterized in that a variable current load circuit is connected to the element producing direct current (DC) or alternating current (AC) electric energy, which variable current load circuit is controlled by a computer based on the cooperating real-time counting/positioning circuit incorporated between the element producing direct current (DC) or alternating current (AC) electric energy and/or the mechanical system, and the computer.

Preferably, the variable current load circuit is in the form of resistors R₁, R₂, Rₓ, Rₙ₋₁, Rₙ connected in parallel or in series through powered up keys K₁, K₂, Kₓ, Kₙ₋₁, Kₙ, respectively, controlled by the computer.

Preferably, between the element producing direct current (DC) or alternating current (AC) electric energy and the computer, there is incorporated a power supply for powering said computer and/or for storing electric energy produced by said element producing direct current (DC) or alternating current (AC) electric energy.

Preferably, the element producing direct current (DC) or alternating current (AC) electric energy is in the form of an electric generator or an electric alternator or an electric motor.

Preferably, the counting/positioning circuit incorporated between the element producing direct current (DC) or alternating current (AC) electric energy and the computer constitutes a real-time rotation counter circuit, whereas the counting/positioning circuit incorporated between the mechanical system and the computer constitutes a real-time person positioning circuit.

Preferably, the person positioning circuit is equipped with at least one position sensor directed at the person performing exercises on the piece of equipment.

The solution provided for according to the aspects proposed above ensures a suitable method and system for energy absorption for use in particular in exercise apparatuses, which helps to balance the kinetic energy expended by the person performing exercises while taking into account the psychomotor parameters of the person performing exercises, such as, *inter alia,* body weight or movement dynamics of the person performing exercises on such an exercise apparatus, with the energy absorbed by the system embedded in such an exercise apparatus. As a result, apparatuses of this kind are highly energy-intensive and cost-effective in use.

Additionally, thanks to the embedded intelligent system for energy absorption, the person performing exercises on said exercise apparatus may always feel comfortably due to the fact that the energy provided by that person to the exercise apparatus is immediately balanced by a change in load.

Furthermore, the method and system for energy absorption according to the invention is more universal compared to the solutions known from the prior art and may be also used in other areas of life. The proposed method and system may be used as the main functional element, for example, in exercise apparatuses, especially in the so-called passive motion fitness equipment.

### Brief Description of the Drawings

The subject matter of the invention is presented in an embodiment in relation to the enclosed drawings wherein:
- **FIG. 1**: shows a system for energy absorption according to the invention;
- **FIG. 2**: shows a simplified exemplary system for energy absorption embedded in a piece of fitness equipment commonly known as "Jacobs Ladder", in accordance with the embodiment according to the invention, to carry out the method according to the invention.

### Detailed Description of the Invention

The subject matter of the invention is described in detail below with reference to the attached figures and an embodiment. The present invention is not limited only to the detailed embodiment described herein.

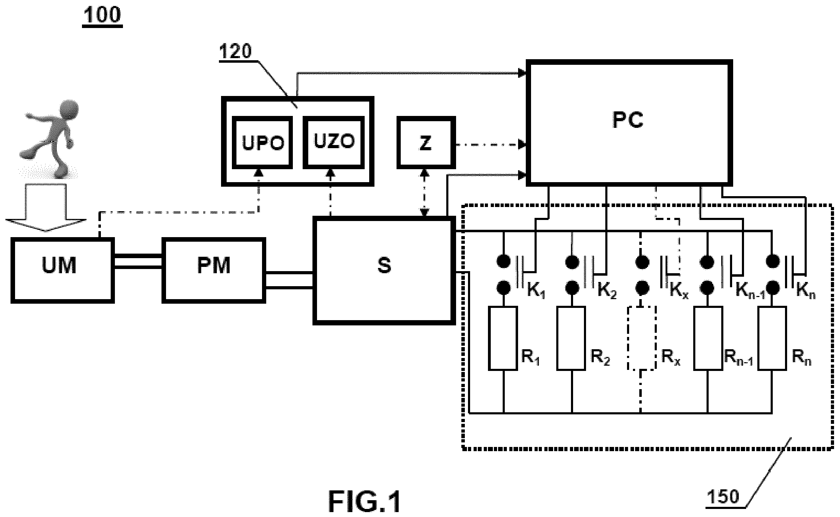

The embodiment presented in **FIG. 1** illustrates a system 100 for energy absorption designed for use in particular in exercise apparatuses, the so-called fitness equipment. The said system 100 for energy absorption is composed of a mechanical system UM designed to convert the kinetic energy produced by the person performing exercises into rotational movement driving a mechanical gear PM to which there is connected an element S producing direct current (DC) electric energy, which element cooperates with a real-time counting/positioning circuit 120 and a variable current load circuit 150 controlled by a computer PC based on information generated by said counting/positioning circuit 120.

In this embodiment, the counting/positioning circuit 120 constitutes a real-time rotation counter circuit UZO incorporated between the element S producing direct current (DC) or alternating current (AC) electric energy and the computer PC. However, other variants of embodiments are not excluded, among which in one embodiment the counting/positioning circuit 120 constitutes a real-time person positioning circuit UPO which is incorporated between the mechanical system UM and the computer PC. In yet another embodiment, the counting/positioning circuit 120 is incorporated, through a real-time rotation counter circuit UZO and a real-time person positioning circuit UPO, between the element S producing direct current (DC) or alternating current (AC) electric energy and a mechanical system UM, and a computer PC.

The whole system 100 is powered from own source, i.e. from the element S which produces direct current (DC) electric energy when the person performing exercises begins to perform an exercise. Moreover, according to the presented embodiment, a power supply Z is incorporated between the element S producing direct current (DC) electric energy and the computer PC, which is used to power said computer PC and store electric energy produced by said element S producing direct current (DC) electric energy.

Additionally, the whole system 100 for energy absorption has been defined as a functional element with which any exercise apparatus may be equipped.

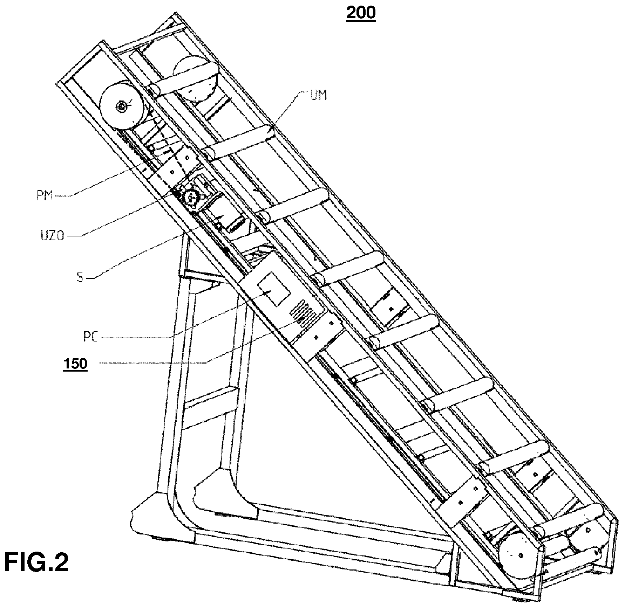

With reference to the above, to provide a better view of the essence of the invention of **FIG. 1****,** **FIG. 2** presents a simplified embodiment of the method and system 100 for energy absorption, which system 100 has been embedded in a piece of fitness equipment 200 commonly known as "Jacobs Ladder", which ladder has been depicted for illustration purposes only and will be described in more detail below.

A person performing exercises on the piece of fitness equipment 200 commonly known as "Jacobs Ladder" causes motion by climbing the steps of the ladder, which steps are displaced from the top downwards under the weight of the person performing exercises and due to the energy of his/her legs and arms, which enables the person performing exercises to stay at one predetermined level. The ladder steps being displaced in the piece of fitness equipment 200 are attached to a chain which drives two toothed wheels mounted at the top and at the bottom of the ladder (not shown for reasons of simplification). Rotation of one of the toothed wheels drives, by means of a mechanical gear PM, an element S producing direct current (DC) electric energy. In this embodiment it is a permanent magnet direct current (DC) electric motor S. The motion of the chain and toothed wheels is converted, in the mechanical system UM, into forced rotational movement of the coils of the permanent magnet direct current (DC) electric motor S. As a result, the coils rotating in a permanent magnetic field induce voltage which is used to power the piece of fitness equipment 200.

To ensure the steady position of the person performing exercises on the piece of fitness equipment 200, irrespective of his/her weight and physical characteristics, it is necessary to adequately control the load so that the person performing exercises always feels comfortably on said piece of fitness equipment 200. To achieve this purpose, a variable current load circuit 150 is connected to the terminals of the permanent magnet direct current (DC) electric motor S, which circuit in this embodiment is in the form of five resistors R₁ to R₅ switched by five keys K₁ to K₅, respectively, which are selected by a computer PC, i.e. they are controlled and switched based on information generated by a real-time rotation counter circuit UZO. The said real-time rotation counter circuit UZO cooperates with the permanent magnet direct current (DC) electric motor S and currently sends information regarding an instantaneous rotational speed and information regarding a change in the rotational speed to the computer PC.

The computer PC subsequently analyses said information regarding an instantaneous rotational speed and information regarding a change in the rotational speed of the permanent magnet direct current (DC) electric motor S. This is carried out by selecting suitable values of current load in order to balance the kinetic energy expended by the person performing exercises with the energy absorbed by the system, wherein the value of current load that is selected by the computer PC is dependent on the psychomotor parameters of the person performing exercises. In the embodiment, the body weight and movement dynamics of the person performing exercises were taken into account as the psychomotor parameters of that person performing exercises.

When analyzing the information regarding rotations, one can notice a dependence between the above-mentioned changes in the function of body weight of the person performing exercises and his/her dynamics and vigor during the performance of exercises on the piece of fitness equipment 200.

This information, having been processed by the computer PC, controls the keys K₁ to K₅ which switch respective sets of resistors R1 to R5 so as to stabilize the rotation of the permanent magnet direct current (DC) electric motor S and thus to stabilize the work of said piece of fitness equipment 200 commonly known as "Jacobs Ladder".

Exemplary resistor values assumed for the implemented embodiment are as follows: R1 = 47Ω; R2 = 24Ω; R3 = 12Ω; R4 = 6,2Q; R5 = 3,3Ω. Switching all combinations of resistors R₁ to R₅ by means of keys K₁ to K₅, 32 variants of the resultant resistance will be obtained. Changes in the resistance will vary from 1,64Ω to 47Ω. These changes in resistance result in a change of the braking torque of the permanent magnet direct current (DC) electric motor S, and thus the person performing exercises feels a greater or smaller resistance of the ladder rungs of the piece of fitness equipment 200. With a permanent load of the mechanical system UM over time, the value of the rotational speed of the permanent magnet direct current (DC) electric motor S will be constant.

In summary, the essence of the solution according to the invention consists in the use of suitable resistors Rₙ, selected from a resistor ladder series, which resistors, depending on the kinetic energy supplied by the person performing exercises, short-circuit the voltage produced in the permanent magnet direct current (DC) electric motor S. The current flowing through a resistor Rₙ is converted into thermal energy so as to balance the kinetic energy supplied by the person performing exercises.

The above description of the presented embodiment has been provided to enable a person skilled in the art to implement or use the invention. The present embodiment may be modified to include all such changes, modifications and variants that fall within the essence and scope of the attached patent claims. The basic principles defined herein may thus be applied in other embodiments without extending the scope of the invention. Therefore, the present invention is not intended to limit it to the presented embodiment but to provide it with the widest possible scope consistent with the principles and new features presented therein.

Thus, the solution according to the present invention uses the above-specified technical means as indicated in FIG. 1 to offer a system for energy absorption designed for use in particular in exercise apparatuses, and especially in the so called fitness equipment. The present system is based on the idea of balancing the kinetic energy expended by a person performing exercises with the energy absorbed by the system according to the invention. The system constitutes a component part of the above-described piece of fitness equipment.

The invention is capable of being used in particular in all applications where kinetic energy can be generated, i.e. in exercise apparatuses in particular, but the use of the solution according to the invention in other fields is not excluded.

## Claims

1. A method for energy absorption for use in particular in exercise apparatuses, consisting in that the kinetic energy expended by the person performing exercises is converted, in a mechanical system, into rotational movement which drives a mechanical gear at the end of which there is connected an element producing direct current (DC) or alternating current (AC) electric energy, in which element rotational movement is converted into voltage, **characterized in that** the element (S) producing direct current (DC) or alternating current (AC) electric energy and/or the mechanical system (UM) is in cooperation with a real-time counting/positioning circuit (120), wherein information is generated which information is subsequently sent to a computer (PC) wherein said information is analyzed, and subsequently a variable current load circuit (150) connected to the element (S) producing direct current (DC) or alternating current (AC) electric energy is controlled by means of the above-mentioned information processed by a computer (PC) in such a manner that suitable values of current load are selected in order to balance the kinetic energy expended by the person performing exercises with the energy absorbed by a system (100) for energy absorption, wherein the value of current load that is selected by the computer (PC) is dependent on the psychomotor parameters of the person performing exercises.

2. The method according to claim 1, **characterized in that,** in the case where the counting/positioning circuit (120) cooperates with the element (S) producing direct current (DC) or alternating current (AC) electric energy, there is generated information regarding an instantaneous rotational speed and information regarding a change in the rotational speed of said element (S) producing direct current (DC) or alternating current (AC) electric energy which information constitutes a rotation counter circuit (UZO), whereas in the case where the counting/positioning circuit (120) cooperates with the mechanical system (UM), there is generated information regarding the position of the person performing exercises on a piece of equipment (200) based on at least one position sensor which constitutes a person positioning circuit (UPO).

3. The method according to claim 1, **characterized in that** the body weight of the person performing exercises and movement dynamics of the person performing exercises on an exercise apparatus are used as psychomotor parameters thereof.

4. The method according to claim 1, **characterized in that** the computer (PC) is powered from the element (S) producing direct current (DC) or alternating current (AC) electric energy through a power supply (Z).

5. The method according to claim 1 or 4, **characterized in that** the power supply (Z) is used to store electric energy which is produced by the element (S) producing direct current (DC) or alternating current (AC) electric energy.

6. A system for energy absorption for use in particular in exercise apparatuses which has a mechanical system for converting the kinetic energy produced by the person performing exercises into rotational movement driving a mechanical gear to which there is connected an element producing direct current (DC) or alternating current (AC) electric energy, in which element rotational movement is converted into voltage, **characterized in that** a variable current load circuit (150) is connected to the element (S) producing direct current (DC) or alternating current (AC) electric energy, which variable current load circuit is controlled by a computer (PC) based on the cooperating real-time counting/positioning circuit (120) incorporated between the element (S) producing direct current (DC) or alternating current (AC) electric energy and/or a mechanical system (UM), and the computer(PC).

7. The system according to claim 6, **characterized in that,** the variable current load circuit (150) is in the form of resistors (R₁, R₂, Rₓ, Rₙ₋₁, Rₙ) connected in parallel or in series through powered up keys (K₁, K₂, Kₓ, Kₙ₋₁ Kₙ), respectively, controlled by the computer (PC).

8. The system according to claim 6, **characterized in that** between the element (S) producing direct current (DC) or alternating current (AC) electric energy and the computer (PC), there is incorporated a power supply (Z) for powering said computer (PC) and/or for storing electric energy produced by said element (S) producing direct current (DC) or alternating current (AC) electric energy.

9. The system according to claim 6 or 8, **characterized in that** the element (S) producing direct current (DC) or alternating current (AC) electric energy is in the form of an electric generator or an electric alternator or an electric motor.

10. The system according to claim 6, **characterized in that** the counting/positioning circuit (120) incorporated between the element (S) producing direct current (DC) or alternating current (AC) electric energy and the computer (PC) constitutes a real-time rotation counter circuit (UZO), whereas the counting/positioning circuit (120) incorporated between the mechanical system (UM) and the computer (PC) constitutes a real-time person positioning circuit (UPO).

11. The system according to claim 10, **characterized in that** the person positioning circuit (UPO) is equipped with at least one position sensor directed at the person performing exercises on the piece of equipment (200).
